# EUROPEAN PATENT SPECIFICATION

(11) **EP 3 432 159 B1**
(45) Date of publication and mention of the grant of the patent: **30.11.2022**
(21) Application number: 17765741.8
(22) Date of filing: 07.03.2017
(51) Int. Cl.: G06F 16/17, G06F 12/02

(54) **GARBAGE COLLECTION METHOD AND DEVICE**
MÜLLSAMMELVERFAHREN UND -VORRICHTUNG
PROCÉDÉ ET DISPOSITIF DE RÉCUPÉRATION D'ESPACE MÉMOIRE

(30) Priority: 17.03.2016 CN 201610154498
(43) Date of publication of application: 23.01.2019
(73) Proprietor: Alibaba Group Holding Limited, Grand Cayman (KY)
(72) Inventor: ZHANG, Jie, Hangzhou Zhejiang 311121 (CN); ZHANG, Chen, Hangzhou Zhejiang 311121 (CN); HE, Le, Hangzhou Zhejiang 311121 (CN); SHI, Yingjie, Hangzhou Zhejiang 311121 (CN); HUANG, Yan, Hangzhou Zhejiang 311121 (CN)
(74) Representative: Barker Brettell LLP
(86) International application number: PCT/CN2017/075830
(87) International publication number: WO 2017/157199

(56) References cited:
- CN-A- 103 336 744
- CN-A- 103 617 023
- CN-A- 104 156 414
- SUNIL SOMAN ET AL: "Dynamic selection of application-specific garbage collectors", ISMM 2004 : THE 2004 INTERNATIONAL SYMPOSIUM ON MEMORY MANAGEMENT ; VANCOUVER, BRITISH COLUMBIA, CANADA, OCTOBER 24 - 25, 2004 ; CO-LOCATED WITH OOPSLA 2004, NEW YORK, NY : ACM, US, 24 October 2004 (2004-10-24), pages 49-60, XP058233991, DOI: 10.1145/1029873.1029880 ISBN: 978-1-58113-945-7

## Description

### TECHNICAL FIELD

The present invention relates to the field of computers, and in particular, to a garbage collection method and apparatus.

### BACKGROUND

The existing Oracle Internet Directory Garbage Collection Framework supports collection of Lightweight Directory Access Protocol (LDAP) garbage, On the other hand, the Adobe AEM's garbage collection system is used for collection of garbage for packets, temporary files, and workflow load. In addition, the WorldServer's garbage collection system mainly collects garbage generated in a database.

As can be seen from the above that the existing garbage collection systems are generally used for collection of garbage types having the same field features. and are not applicable to scenarios where various heterogeneous garbage needs to be collected.

Sunil Soman et al: "Dynamic selection of application-specific garbage collectors" ASMM 2004 : The 2004 International Symposium on Memory Management; Vancouver, British Columbia, Canada, October 24-25, 2004; co-located with Oopsla 2004, New York, NY : ACM, US, 24 October 2004 (2004-10-24), pages 46-60, XP058233991 discloses a Java Virtual Machine extension that facilitates dynamic switching between a number of very different popular garbage collectors.

### SUMMARY

The present invention provides a garbage collection method and apparatus, used for solving the problem that the existing garbage collection systems are generally used for collection of garbage types having the same field features. The existing garbage collection systems are not applicable to scenarios where various heterogeneous garbage needs to be collected, which in turns shows its poor versatility.

To achieve the above objectives, the present invention provides a garbage collection method for a computer system, the method, comprising: scanning all service items of the system, the service items including applications, each service item including one or more service types; generating a service item list based on a scanning result, wherein the service item list comprises target service types comprised in all the service items, wherein different service types correspond to different collection components; determining target collection components corresponding to each of the target service types, the target collection components encapsulating a number of garbage collecting logics, each garbage collection logic being different such that garbage collection logics of the target components are not duplicated for the service items on the service item list; and collecting garbage for each of the target service types by using the garbage collection logic of the target collection components that corresponds with each target service type to collect heterogeneous garbage types.

To achieve the above objectives, the present invention further provides a garbage collection apparatus for a computer system, the apparatus comprising: an obtaining module, configured to scan all service items of the system, the service items including applications, each service item including one or more service types; and generate a service item list based on a scanning result, wherein the service item list comprises target service types comprised in all the service items, and different service types correspond to different collection components; a determining module, configured to determine target collection components corresponding to each of the target service types, the target collection components encapsulating a number of garbage collecting logics, each garbage collection logic being different such that garbage collection logics of the target components are not duplicated for the service items on the service item list; and a collection module, configured to collect garbage for each of the target service types by using the garbage collection logic of the target collection components that corresponds with each target service type to collect heterogeneous garbage types,

A garbage collection apparatus not covered by the claims comprises: a scanner, configured to obtain target service types comprised in all service items, wherein different service types correspond to different collection components; a scheduler, configured to determine target collection components corresponding to each of the target service types; and an executor, configured to collect garbage for the corresponding target service types by using each of the target collection components.

The executor may be further configured to establish corresponding collection components for different service types before the scanner obtains the service types comprised in all service items, wherein one service type corresponds to at least one collection component.

The executor may be specifically configured to establish a collection component that corresponds to all the service types having the same garbage collection logic, and respectively establish corresponding collection components for each of the other service types, wherein all the service types having the same garbage collection logic share and reuse the corresponding collection component.

The scanner may be specifically configured to scan all the service items and generate a service item list based on a scanning result, wherein the service item list may comprise the target service types comprised in all the service items.

The scheduler may be specifically configured to do the following: after the scanner generates the service item list, judge whether a new target service type exists in the service item list; and when it is judged that a new target service type exists, obtain a new target collection component corresponding to the new target service type.

The scheduler may be further specifically configured to do the following: when it is judged that no new target service type exists, obtain deleted target service types of each service item according to the service item list; judge whether the target collection component corresponding to the deleted target service type is shared and reused by other target service types in the service item list; delete the target collection component corresponding to the deleted service type when it is judged that the target collection component corresponding to the deleted service type is not shared and reused; determine corresponding target collection components for other target service types in the service item list, wherein the other target service types refer to target service types other than the new target service types and the deleted target service types in the service item list; and treat the target service types comprised in each service item as a task and allocate the tasks to the executor.

The executor may be specifically configured to receive the tasks allocated by the scheduler, allocate the tasks to all the corresponding target collection components, load all the target collection components, allocate thread pools needed by the target collection components, and start the target collection components to use the allocated thread pools to execute the garbage collection logic to perform garbage collection for the corresponding target service types.

The apparatus may further comprise a faulty processor, configured to do the following: in the process of using the target collection components to collect garbage for the corresponding target service types, monitor a garbage collection progress and using the monitored garbage collection progress as a checkpoint.

The faulty processor may be further configured to perform, when a breakpoint occurs in the garbage collection process, breakpoint recovery by using the checkpoint closest to the breakpoint time.

### BRIEF DESCRIPTION OF THE DRAWINGS

FIG. 1 is a schematic flowchart of a garbage collection method according to Embodiment 1 of the present invention;
FIG. 2 is a schematic flowchart of a garbage collection method according to Embodiment 2 of the present invention;
FIG. 3 is a schematic application diagram of a garbage collection method according to Embodiment 2 of the present invention;
FIG. 4 is a schematic structural diagram of a garbage collection apparatus according to Embodiment 3 of the present invention;
FIG. 5 is a schematic structural diagram of a garbage collection apparatus according to Embodiment 4 which is not covered by the claims; and
FIG. 6 is a schematic structural diagram of a garbage collection apparatus according to Embodiment 5 which is also not covered by the claims.

### DETAILED DESCRIPTION OF THE EMBODIMENTS

A garbage collection method and apparatus provided by the embodiments of the present invention are described in detail below with reference to the accompanying drawings.

### Embodiment 1

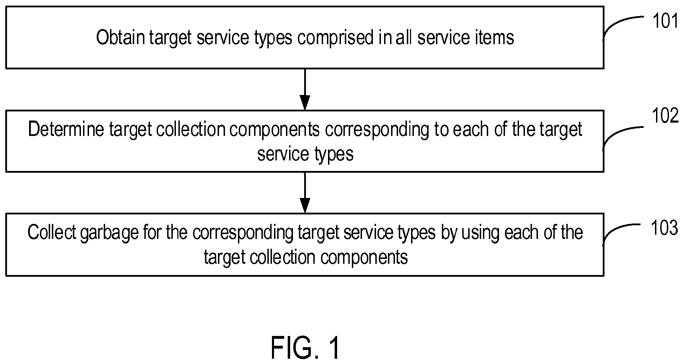

As shown in FIG. 1, a schematic flowchart of a garbage collection method according to Embodiment 1 of the present invention is illustrated. The garbage collection method includes the following steps:
S101: Obtain target service types comprised in all service items.

Different service types correspond to different collection components.

Before target service types comprised in all service items are obtained, collection components that correspond to different service types are established. Specifically, a collection component that corresponds to each service type is established; yet in actual applications, some service types have the same garbage collection logic. In order to save resources, the service types having the same garbage collection logic may share and reuse a collection component. In this case, the process of establishing corresponding collection components for different service types is as follows.

Specifically, a collection component that corresponds to all the service types having the same garbage collection logic is established, wherein all the service types having the same garbage collection logic share and reuse the corresponding collection component. For example, a service type A and a service type B have the same garbage collection logic; and a corresponding collection component 1 is established for the service type A and the service type B. The service type A and the service type B share and reuse the collection component 1. A service type D and a service type G have the same garbage collection logic; a collection component 5 is established for the service type D and the service type G, and the service type D and the service type G share and reuse the collection component 5.

Further, because garbage collection logics of the service types other than those having the same garbage collection logic are different, corresponding collection components are respectively established for each of the other service types. For example, a service type C, a service type E, and a service type F may be referred to as other service types. The garbage collection logics of the service type C; the service type E, and the service type F are all different; and thus a corresponding collection component 2, collection component 3, and collection component 4 are respectively established for the service type C, the service type E, and the service type F.

In order to dynamically expand the garbage type, in this embodiment, the garbage collection logic is encapsulated by the collection component; and the collection component has a hot-swap function. Based on the collection component, the garbage type can be flexibly expanded.

Further, in order to implement collection of a large amount of heterogeneous garbage types, in this embodiment, different collection components are established for different service types. Generally, one service type corresponds to at least one collection component. In the garbage collection method provided in this embodiment, the collection component established by using the service type as the granularity improves the versatility of the method, making the method applicable to the environment where big data processing is needed.

In this embodiment, all the service items are scanned; and a service item list is generated based on the scanning result. The service item list comprises the target service types comprised in all the service items. After the service item list is obtained through scanning, the service item list may be stored. In this embodiment, all the service items are scanned periodically, so as to automatically trigger a garbage collection process; and a user may set a collection cycle according to service scenarios. For example, the user may set a time interval through a front end interface, and the cycle may be set at hourly/daily/weekly/monthly intervals. After the scan is started, the garbage collection process is started accordingly. Optionally, operations on the front end interface are performed manually by the user, so as to start a scan to complete the garbage collection process.

S102: Determine target collection components corresponding to each of the target service types.

After the target service types included in all the service items are obtained, because each service type corresponds to at least one collection component, the target collection component corresponding to the target service type is determined according to the included target service type.

S103: Collect garbage for the corresponding target service types by using each of the target collection components.

After all the target collection components are obtained, garbage generated by the corresponding target service types is collected by using the target collection components. Specifically, the target service types included in each service item are used as a task which is allocated to corresponding target collection components; all the target collection components are loaded; thread pools needed by the target collection components are allocated; the target collection components are started to use the allocated thread pools to execute the garbage collection logic; and the target collection components perform garbage collection for the corresponding target service types. A plurality of thread pools may be allocated to the target collection components. When there are a plurality of thread pools, the target collection components may execute the garbage collection logic in parallel to perform garbage collection for the corresponding target service types.

In the garbage collection method provided in this embodiment, target service types comprised in all service items are obtained; target collection components corresponding to the target service types are determined; and garbage for the corresponding target service types are collected by using the target collection components. In this embodiment, collection components are established by using the service type as granularity, and different collection components are established to correspond to different service types. Performing garbage collection based on these components can flexibly extend the scope of the service types, thereby achieving the collection of heterogeneous service types with good versatility.

### Embodiment 2

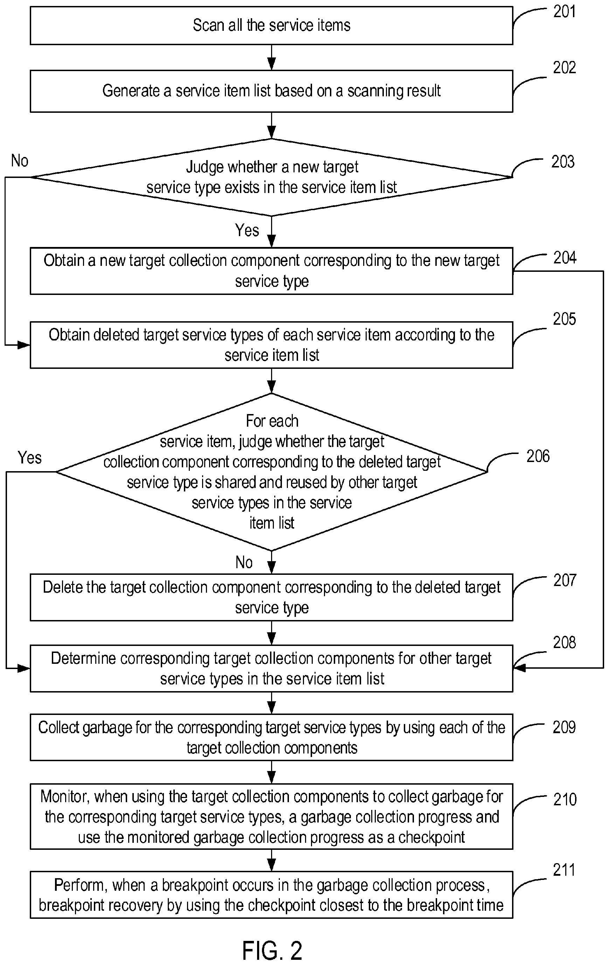

As shown in FIG. 2, a schematic flowchart of a garbage collection method according to Embodiment 2 of the present invention is illustrated. The garbage collection method includes the following steps:
S201: Scan all the service items.

In this embodiment, all the service items are scanned; and a service item list is generated based on the scanning result. The service item list comprises the target service types comprised in all the service items. After the service item list is obtained through scanning, the service item list may be stored. In this embodiment, all the service items may be scanned periodically. For example, the user may set a time interval through a front end interface, and the cycle may be set at hourly/daily/weekly/monthly intervals. After the scan is started, the garbage collection process is started accordingly. Optionally, operations on the front end interface are performed manually by the user, so as to start a scan to complete the garbage collection process.

S202: Generate a service item list based on the scanning result.

The service item list comprises the target service types comprised in all the service items.

All the service items are scanned. After scanning, a scanning result is obtained, wherein the scanning result includes the service types comprised in each service item; and a service item list is generated based on the scanning result. That is to say, the service item list includes the target service types comprised in all the service items. The generated service item list includes an identifier of a service item, an identifier of a target service type, and a corresponding relationship between the service item and the included target service type.

S203: Judge whether a new target service type exists in the service item list.

Specifically, the service item list generated after the current scan is compared with a service item list generated after the previous scan so as to judge whether a new target service item exists in the current service item types; if the judging result is positive, the process proceeds to step 204; otherwise, proceeds to step 205.

S204: Obtain a new target collection component corresponding to the new target service type.

After a new target service type is obtained, a new target collection component corresponding to the new target service type is added to a device for managing the collection components. Before the new target collection component is added, it needs to be established by a management person according to the garbage collection logic of the target service type.

S205: Obtain deleted target service types of each service item according to the service item list.

Specifically, the service item list generated by the current scan is compared with the service item list generated by the previous scan, so as to determine the deleted target service types of each service item in the service item list.

S206: For each service item, judge whether the target collection component corresponding to the deleted target service type is shared and reused by other target service types in the service item list.

For each service item, when the deleted target service type is determined, it needs to be judged whether the target collection component corresponding to the deleted target service type is shared and reused by at least one of the other target service types in the service item list. Here, the target collection component corresponding to the deleted target service type is called a to-be-deleted target collection component. If the to-be-deleted target collection component is not shared and reused by other service types, it indicates that the to-be-deleted target collection component can be deleted; and the process proceeds to step 207.

If the to-be-deleted target collection component is shared and reused by other service types, it indicates that the to-be-deleted target collection component cannot be deleted just yet; the to-be-deleted target collection component is kept; and the process proceeds to step 208.

S207: Delete the target collection component corresponding to the deleted target service type.

After the target collection component corresponding to the deleted target service type is deleted, the process continues to step 208.

S208: Determine corresponding target collection components for other target service types in the service item list.

Further, target collection components that correspond to each of the other target service types other than the new target service type and the deleted target service type in the service item list need to be determined. For related contents of determining corresponding target collection components for the target service types, reference can be made to the description in the above embodiment. Details are not provided herein again.

S209: Collect garbage for the corresponding target service types by using each of the target collection components.

After the corresponding target collection components are determined for all the target service types, garbage for the corresponding target service types can be collected by using each of the target collection components. Regarding the specific process of the garbage collection, reference can be made to the description in the above embodiment. Details are not provided herein again.

In this embodiment, performing garbage collection based on the collection components meets the needs for collecting a large amount of heterogeneous garbage types on a big data open processing platform. Based on the hot-swap function of the collection components, the collection components have good dynamic extensibility and can effectively support garbage generated by new service types, which in turn is applicable to a big data processing environment.

S210: Monitor, when using the target collection components to collect garbage for the corresponding target service types, a garbage collection progress and use the monitored garbage collection progress as a checkpoint.

S211: Perform, when a breakpoint occurs in the garbage collection process, breakpoint recovery by using the checkpoint closest to the breakpoint time.

In this embodiment, a snapshot function is provided in the garbage collection method, which can be triggered periodically. In the process of using the collection components to collect garbage for various service types, a garbage collection progress is monitored. After the snapshot function is triggered, the garbage collection progress at the moment is recorded; and the monitored garbage collection progress is marked as a checkpoint, and then the checkpoint is stored in a disk. In the garbage collection process, if an abnormal situation occurs which the garbage collection to be interrupted, breakpoint recovery may be performed based on the closest checkpoint.

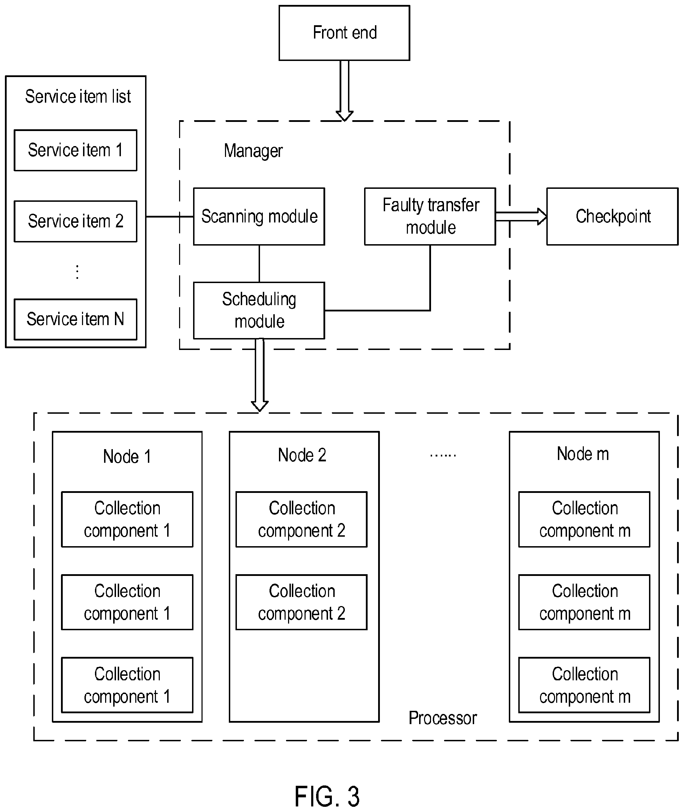

The garbage collection method provided in this embodiment may be implemented by a garbage collection system shown in FIG. 3. As shown in FIG. 3, the garbage collection system includes a front end, a manager, and a processor. The front end of the garbage collection system may be a human-machine interaction module for providing a human-machine interaction interface. A user may set up the garbage collection system through the interface. For example, functions like start, turn off, or timing may be set up through the interface. The manager includes a scanning module (Scanner), a scheduling module (Scheduler), and a faulty transfer module (Failover). The processor includes a plurality of nodes (worker), and each worker is provided with a collection component. The scanner scans all the service items and obtains a service item list. The scheduler is responsible for task scheduling and can obtain a scanning result of the scanner, i.e., a service item list; and then the scheduler distributes the service types included in the service item as tasks to the corresponding workers in the processor. The scheduler may also monitor the running state of the garbage collection system, and obtain a garbage collection result.

After the corresponding service type of the collection component is allocated to the worker in the processor, the worker may execute a specific collection logic set for the collection component. The worker may allocate a plurality of thread pools to the collection components. When there are a plurality of thread pools, the garbage collection logics of the corresponding collection components may be executed in parallel, so as to improve the efficiency of the garbage collection.

In the process of performing garbage collection for the service item, the faulty transfer module in the manager may monitor the garbage collection progress, mark a monitored garbage collection progress as a checkpoint at regular intervals, and perform breakpoint recovery based on the checkpoint.

To better understand the garbage collection method provided in this embodiment, the following example is used for illustration:
Service items include Taobao, Alibaba, AMAP, and AliPay, etc.

Service types include real-time query, machine learning, streaming calculation, online monitoring, and offline calculation.

One service type corresponds to one or more collection components; and each collection component is provided on a worker of the processor in the garbage collection system. For example, real-time query corresponds to a collection component which is marked as a collection component 1, and the collection component 1 is provided on a worker 1. The machine learning corresponds to two collection components which are marked as collection components 2 and 3; and the collection components 2 and 3 are respectively provided on a worker 2 and a worker 3. Streaming calculation corresponds to a collection component which is marked as a collection component 4, and the collection component 4 is provided on a worker 4. Online monitoring corresponds to a collection component which is marked as a collection component 5, and the collection component 4 is provided on a worker 5. The offline monitoring corresponds to three collection components which are marked as a collection component 6, a collection component 7, and a collection component 8; and the collection components 6, 7, and 8 are respectively provided on workers 6, 7, and 8. One service item includes a plurality of target service types. For example, AMAP's service item includes target service types such as real-time query and streaming calculation. The target service types in Taobao's service item include real-time query, streaming calculation, and online monitoring. The target service types in Alibaba's service item include real-time query, machine learning, and streaming calculation. The target service types in AlipPay's service item include real-time query, machine learning, and online monitoring.

When the scanner in the garbage collection system scans all the service items, target service types included in each service item are obtained; and all the service item scanning results are used to generate a service item list. The scheduler obtains target collection components associated with the service items according to the service item list; and then allocates the target service types in the service item to the corresponding workers. The worker performs garbage collection for the corresponding service types based on garbage collection logic of the target collection components.

For example, the target service types in AMAP's service item include real-time query and streaming calculation. In order to perform garbage collection for the service item, corresponding target collection components need to be invoked, wherein the target collection components include a collection component 1 and a collection component 4. The garbage of the service item is collected based on the collection component 1 and the collection component 4. The collection component 1 is used to collect garbage of real-time query, whereas the collection component 4 is used to collect garbage of streaming calculation. In this example, the worker may allocate a plurality of thread pools to the target collection components. The target collection components may execute target collection components in parallel through a plurality of thread pools, so as to improve the garbage collection efficiency.

The target service types in Taobao's service item include real-time query, streaming calculation, and online monitoring. Target collection components needed to perform garbage collection on the service item include the collection components 1, 4, and 5. The garbage of the Taobao's service item is collected based on the collection components 1, 4, and 5. For the specific processes, reference can be made to the processing process of AMAP's service item. Details are not provided herein again.

When all the service items do not include the real-time query as the target service type, the scheduler may instruct the worker 1 to delete the corresponding collection component 1. When only some service items do not include the real-time query as the target service type, the collection component 1 corresponding to the real-time query target service type cannot be deleted. For example, when Alibaba's service item does not include the real-time query as the target service type, and the Taobao's service item still includes the real-time query as the target service type, the collection component 1 corresponding to the target service type cannot be deleted.

When a new target service type is added, the target collection component corresponding to the new target service type needs to be added. For example, when the newly added target service type is offline calculation, a collection component 6 of the offline calculation target service is added accordingly; and the collection component 6 is provided on a corresponding worker.

When the newly added target service type is applied to the Taobao's service item and when Taobao's service items are scanned, it can be obtained that the Taobao's service items include real-time query, streaming calculation, online monitoring, and offline calculation. Accordingly, the target collection components include a collection component 1, a collection component 4, a collection component 5, and a collection component 6.

In the process of performing garbage collection on the service item, the failover may monitor the garbage collection progress, mark a monitored garbage collection progress as a checkpoint at regular intervals, and perform breakpoint recovery based on the checkpoint. For example, when an abnormal situation occurs in the garbage collection process, the garbage collection process will be interrupted. When the process is rerun, the garbage collection progress when the interruption occurs can be obtained from the checkpoint; and the garbage collection is resumed from the progress so as to avoid repeating the previous operation.

### Embodiment 3

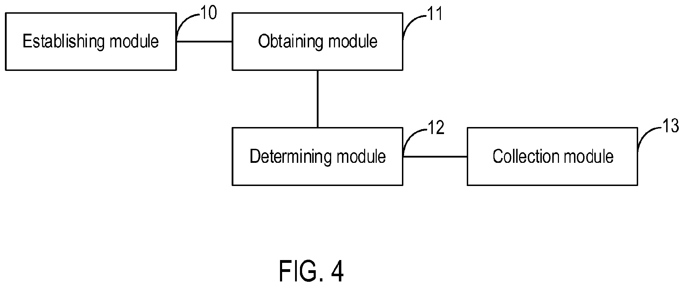

As shown in FIG. 4, a schematic structural diagram of a garbage collection apparatus according to Embodiment 3 of the present invention is illustrated. The garbage collection apparatus includes an establishing module 10, an obtaining module 11, a determining module 12, and a collection module 13.

The establishing module 10 is configured to establish corresponding collection components for different service types before the obtaining module obtains the service types comprised in all service items, wherein one service type corresponds to at least one collection component.

Before target service types comprised in all service items are obtained, collection components that correspond to different service types are established. Specifically, a collection component that corresponds to each service type is established; yet in actual applications, some service types have the same garbage collection logic. In order to save resources, the service types having the same garbage collection logic may share and reuse one collection component. For the process of establishing corresponding collection components for different service types by the establishing module 10, reference can be made to the description in the above embodiment. Details are not provided herein again.

The obtaining module 11 is configured to obtain target service types comprised in all service items, wherein different service types correspond to different collection components.

In order to dynamically expand the garbage type, in this embodiment, the garbage collection logic is encapsulated by the collection component; and the collection component has a hot-swap function. Based on the collection component, the garbage type can be flexibly expanded.

Further, in order to implement collection of a large amount of heterogeneous garbage types, in this embodiment, different collection components are established for different service types. Generally, one service type corresponds to at least one collection component. In this embodiment, the collection component established by using the service type as the granularity improves the versatility, making the method applicable to the environment where big data processing is needed.

In this embodiment, the obtaining module 11 scans all the service items and obtains target service types included in all service items.

The determining module 12 is configured to determine target collection components corresponding to the target service types.

After the target service types included in all the service items are obtained by the obtaining module 11, because each service type corresponds to at least one collection component, the target collection component corresponding to the target service type is determined by the determining module 12 according to the included target service type.

The collection module 13 is configured to collect garbage for the corresponding target service types by using each of the target collection components.

After obtaining the target collection components, the collection module 13 collects garbage for the corresponding target service types by using the target collection components. Specifically, the target service types included in each service item are used as a task which is allocated to corresponding target collection components; all the target collection components are loaded; thread pools needed by the target collection components are allocated; the target collection components are started to use the allocated thread pools to execute the garbage collection logic; and the target collection components perform garbage collection for the corresponding target service types.

In the garbage collection apparatus provided in this embodiment, target service types comprised in all service items are obtained; target collection components corresponding to the target service types are determined; and garbage for the corresponding target service types are collected by using the target collection components. In this embodiment, collection components are established by using the service type as granularity, and different collection components are established to correspond to different service types. Performing garbage collection based on these components can flexibly extend the scope of the service types, thereby achieving the collection of heterogeneous service types with good versatility.

### Embodiment 4 (not within the scope of the claims)

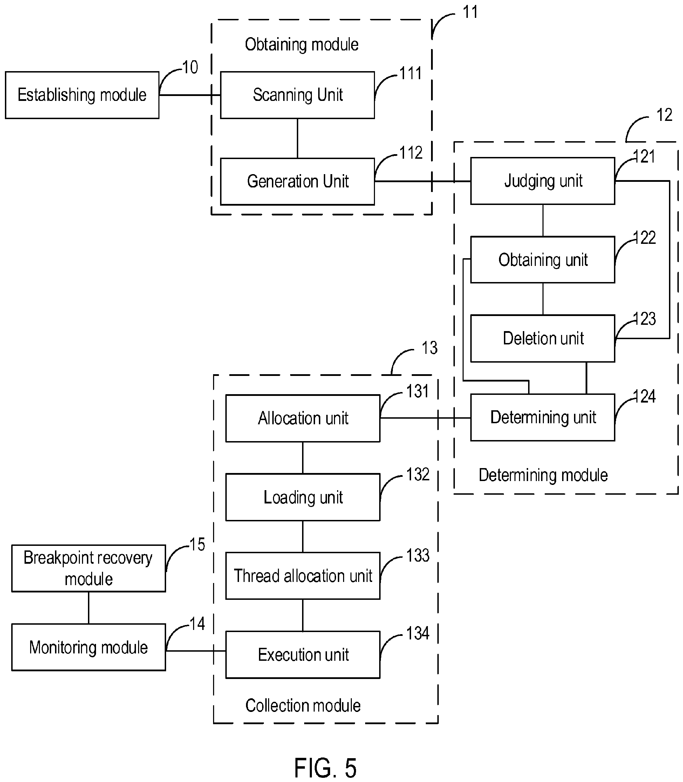

As shown in FIG. 5, a schematic structural diagram of a garbage collection apparatus according to Embodiment 4 is illustrated. In addition to the establishing module 10, the obtaining module 11, the determining module 12, and the collection module 13 in
Embodiment 3, the garbage collection apparatus further includes a monitoring module 14 and a breakpoint recovery module 15.

The establishing module 10 is specifically configured to establish a corresponding collection component for all the service types having the same garbage collection logic, and respectively establish corresponding collection components for each of the other service types, wherein all the service types having the same garbage collection logic share and reuse the corresponding collection component.

In this embodiment, an optional structure of the obtaining module 11 includes a scanning unit 111 and a generation unit 112.

The scanning unit 111 is configured to scan all the service items.

The generation unit 112 is configured to generate a service item list based on a scanning result.

the service item list comprises the target service types comprised in all the service items.

In this embodiment, an optional structure of the determining module 12 includes a judging unit 121, an obtaining unit 122, a deletion unit 123, and a determining unit 124.

The judging unit 121 is configured to judge whether a new target service type exists in the service item list.

The obtaining unit 122 is configured to do the following: when the judging unit judges that a new target service type exists, obtain a new target collection component corresponding to the new target service type.

Further, the obtaining unit 121 is further configured to do the following: when the judging unit judges that no new target service type exists, obtain deleted target service types of each service item according to the service item list.

Further, the judging unit 122 is further configured to judge whether the target collection component corresponding to the deleted target service type is shared and reused by other target service types in the service item list.

The deletion unit 123 is configured to do the following: when the judging unit judges that the target collection component corresponding to the deleted service type is not shared and reused, delete the target collection component corresponding to the deleted service type.

The determining unit 124 is configured to determine target collection components that correspond to other target service types in the service item list, wherein the other target service types refer to target service types other than the new target service types and the deleted target service types in the service item list.

In this embodiment, an optional structure of the collection module 13 includes an allocation unit 131, a loading unit 132, a thread allocation unit 133, and an execution unit 134.

The allocation unit 131 is configured to treat the target service types comprised in each service item as a task and allocating each task to all the corresponding target collection components.

The loading unit 132 is configured to load all the target collection components.

The thread allocation unit 133 is configured to allocate thread pools needed by each of the target collection components.

The execution unit 134 is configured to start the target collection components to use the allocated thread pools to execute the garbage collection logic to perform garbage collection for corresponding target service types.

The monitoring module 14 is configured to monitor, in the process of using the target collection components to collect garbage for the corresponding target service types, a garbage collection progress and use the monitored garbage collection progress as a checkpoint.

The breakpoint recovery module 15 is configured to perform, when a breakpoint occurs in the garbage collection process, breakpoint recovery by using the checkpoint closest to the breakpoint time.

The garbage collection method provided in Embodiments 1 and 2 can be implemented in the garbage collection apparatus shown in FIG. 5.

In this embodiment, collection components are established by using the service type as granularity, and different collection components are established to correspond to different service types. Performing garbage collection based on these components can flexibly extend the scope of the service types, thereby achieving the collection of heterogeneous service types with good versatility.

In this embodiment, performing garbage collection based on the collection components meets the needs for collecting a large amount of heterogeneous garbage types on a big data open processing platform. Based on the hot-swap function of the collection components, the collection components have good dynamic extensibility and can effectively support garbage generated by new service types, which in turn is applicable to a big data processing environment. In the garbage collection process, if an abnormal situation occurs which the garbage collection to be interrupted, breakpoint recovery may be performed based on the closest checkpoint.

### Embodiment 5 (not within the scope of the claims)

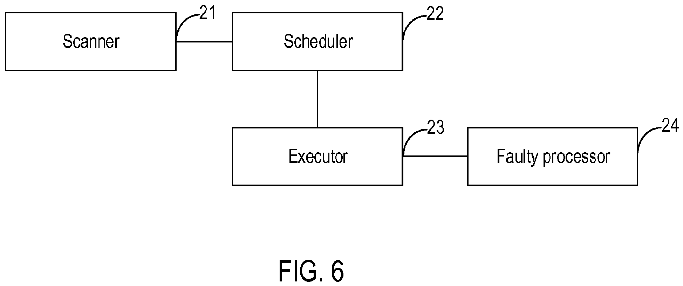

As shown in FIG. 6, a schematic structural diagram of a garbage collection apparatus according to Embodiment 5 is illustrated. The garbage collection apparatus includes a scanner 21, a scheduler 22, and an executor 23.

The scanner 21 is configured to obtain target service types comprised in all service items, wherein different service types correspond to different collection components.

The scheduler 22 is configured to determine target collection components corresponding to each of the target service types.

The executor 23 is configured to collect garbage for the corresponding target service types by using each of the target collection components.

Further, the executor 22 is configured to establish corresponding collection components for different service types before the scanner obtains the service types comprised in all service items, wherein one service type corresponds to at least one collection component.

The executor 22 is specifically configured to establish a collection component that corresponds to all the service types having the same garbage collection logic, and respectively establish corresponding collection components for each of the other service types.

All the service types having the same garbage collection logic share and reuse the corresponding collection component.

The scanner 21 is specifically configured to scan all the service items and generate a service item list based on a scanning result, wherein the service item list comprises the target service types comprised in all the service items.

The scheduler 22 is specifically configured to do the following: after the scanner generates the service item list, judge whether a new target service type exists in the service item list; and when it is judged that a new target service type exists, obtain a new target collection component corresponding to the new target service type.

The scheduler 23 is further specifically configured to do the following: when it is judged that no new target service type exists, obtain deleted target service types of each service item according to the service item list; judge whether the target collection component corresponding to the deleted target service type is shared and reused by other target service types in the service item list; delete the target collection component corresponding to the deleted service type when it is judged that the target collection component corresponding to the deleted service type is not shared and reused; determine corresponding target collection components for other target service types in the service item list, wherein the other target service types refer to target service types other than the new target service types and the deleted target service types in the service item list; and treat the target service types comprised in each service item as a task and allocate the tasks to the executor.

The executor 23 is specifically configured to receive the tasks allocated by the scheduler, allocate the tasks to all the corresponding target collection components, load all the target collection components, allocate thread pools needed by the target collection components, and start the target collection components to use the allocated thread pools to execute the garbage collection logic to perform garbage collection for the corresponding target service types.

The garbage collection apparatus further includes a faulty processor 24.

The faulty processor 24 is configured to do the following: in the process of using the target collection components to collect garbage for the corresponding target service types, monitor a garbage collection progress and using the monitored garbage collection progress as a checkpoint.

The faulty processor 24 is further configured to perform, when a breakpoint occurs in the garbage collection process, breakpoint recovery by using the checkpoint closest to the breakpoint time.

The scanner 21 is specifically configured to scan all the service items and generate a service item list based on a scanning result, wherein the service item list comprises the target service types comprised in all the service items.

The scheduler 22 is specifically configured to do the following: after the scanner generates the service item list, judge whether a new target service type exists in the service item list; and when it is judged that a new target service type exists, obtain a new target collection component corresponding to the new target service type.

The scheduler 23 is further specifically configured to do the following: when it is judged that no new target service type exists, obtain deleted target service types of each service item according to the service item list; judge whether the target collection component corresponding to the deleted target service type is shared and reused by other target service types in the service item list; delete the target collection component corresponding to the deleted service type when it is

Those skilled in the art can understand that all or part of the steps for implementing the method in above embodiments can be accomplished by hardware related to program instructions. The aforementioned program may be stored in a computer-readable storage medium. In execution, the program executes the steps of the method in the above embodiments, and the foregoing storage medium includes various medium that can store program codes, such as a ROM, a RAM, a magnetic disk, or an optical disc.

## Claims

1. A computer implemented garbage collection method for a computer system, the method comprising:
scanning (201) all service items of the system, the service items including applications, each service item including one or more service types;
generating (202) a service item list based on a scanning result, wherein the service item list comprises target service types comprised in all the service items, wherein different service types correspond to different collection components;
determining (207) target collection components corresponding to each of the target service types, the target collection components encapsulating a number of garbage collecting logics, each garbage collection logic being different such that garbage collection logics of the target components are not duplicated for the service items on the service item list; and
collecting (209) garbage for the corresponding target service types by using each of the target collection components.

2. The method according to claim 1, wherein before the obtaining service types comprised in all service items, the method comprises:
establishing corresponding collection components for different service types, wherein one service type corresponds to at least one collection component, and wherein the establishing corresponding collection components for different service types comprises:
establishing a collection component that corresponds to all the service types having the same garbage collection logic, wherein all the service types having the same garbage collection logic share and reuse the corresponding collection component; and
respectively establishing corresponding collection components for each of the other service types.

3. The method according to claim 1 or claim 2, wherein the determining target collection components corresponding to the target service types comprises:
judging (203) whether a new target service type exists in the service item list; and
obtaining (204), if a judging result is positive, a new target collection component corresponding to the new target service type.

4. The method according to claim 3, further comprising:
if the judging result is that no new target service type exists, obtaining (205) deleted target service types of each service item according to the service item list;
judging (206) whether the target collection component corresponding to the deleted target service type is shared and reused by other target service types in the service item list;
if the judging result is negative, deleting (207) the target collection component corresponding to the deleted target service type; and
determining (208) corresponding target collection components for other target service types in the service item list, wherein the other target service types refer to target service types other than the new target service types and the deleted target service types in the service item list.

5. The method according to claim 1 or claim 2, wherein the collecting garbage for the target service types by using the target collection components comprises:
treating the target service types comprised in each service item as a task and allocating each task to all the corresponding target collection components;
loading all the target collection components;
allocating thread pools needed by each of the target collection components;
starting the target collection components to use the allocated thread pools to execute the garbage collection logic to perform garbage collection for corresponding target service types; and
the method further comprises monitoring (210), in the process of using the target collection components to collect garbage for the corresponding target service types, a garbage collection progress and using the monitored garbage collection progress as a checkpoint.

6. The method according to claim 5, wherein after the monitoring, in the process of using the target collection components to collect garbage for the corresponding target service types, a garbage collection progress and using the monitored garbage collection progress as a checkpoint, the method comprises:
performing (211), when a breakpoint occurs in the garbage collection process, breakpoint recovery by using the checkpoint closest to the breakpoint time,

7. A garbage collection apparatus for a computer system, the apparatus comprising:
an obtaining module (11), configured to scan all service items of the system, the service items including applications, each service item including one or more service types; and generate a service item list based on a scanning result, wherein the service item list comprises target service types comprised in all the service items, and different service types correspond to different collection components;
a determining module (12), configured to determine target collection components corresponding to each of the target service types, the target collection components encapsulating a number of garbage collecting logics, each garbage collection logic being different such that garbage collection logics of the target components are not duplicated for the service items on the service item list; and
a collection module (13), configured to collect garbage for the corresponding target service types by using each of the target collection components.

8. The apparatus according to claim 7, wherein the apparatus further comprises:
an establishing module (10), configured to establish corresponding collection components for different service types before the obtaining module obtains the service types comprised in all service items, wherein one service type corresponds to at least one collection component.

9. The apparatus according to claim 8, wherein the establishing module is specifically configured to establish a collection component that corresponds to all the service types having the same garbage collection logic, and respectively establish corresponding collection components for each of the other service types, wherein
all the service types having the same garbage collection logic share and reuse the corresponding collection component.

10. The apparatus according to claim 7, wherein the determining module comprises.
a judging unit (121), configured to judge whether a new target service type exists in the service item list; and
an obtaining unit (122), configured to do the following: when the judging unit judges that a new target service type exists, obtain a new target collection component corresponding to the new target service type.

11. The apparatus according to claim 10, wherein the obtaining unit is further configured to do the following: when the judging unit judges that no new target service type exists, obtain deleted target service types of each service item according to the service item list;
the judging unit is further configured to judge whether the target collection component corresponding to the deleted target service type is shared and reused by other target service types in the service item list;
the determining module further comprises:
a deletion unit (123), configured to do the following: when the judging unit judges that the target collection component corresponding to the deleted service type is not shared and reused, delete the target collection component corresponding to the deleted service type; and
a determining unit (124), configured to determine corresponding target collection components for other target service types in the service item list, wherein the other target service types refer to target service types other than the new target service types and the deleted target service types in the service item list.

12. The apparatus according to any of claims 7 to 9, wherein the collection module comprises:
an allocation unit (131), configured to treat the target service types comprised in each service item as a task and allocating each task to all the corresponding target collection components;
a loading unit (132), configured to load all the target collection components;
a thread allocation unit (133), configured to allocate thread pools needed by each of the target collection components; and
an execution unit (134), configured to start the target collection components to use the allocated thread pools to execute the garbage collection logic to perform garbage collection for corresponding target service types.

13. The apparatus according to claim 12, further comprising:
a monitoring module (14), configured to monitor, in the process of using the target collection components to collect garbage for the corresponding target service types, a garbage collection progress and use the monitored garbage collection progress as a checkpoint; and a breakpoint recovery module (15), configured to perform, when a breakpoint occurs in the garbage collection process, breakpoint recovery by using the checkpoint closest to the breakpoint time.

## Patentansprüche

1. Computerimplementiertes Müllsammelverfahren für ein Computersystem, wobei das Verfahren Folgendes umfasst:
Abtasten (201) aller Dienstleistungspositionen des Systems, wobei die Dienstleistungspositionen Anwendungen enthalten und jede Dienstleistungsposition ein oder mehrere Dienstleistungstypen enthält;
Erzeugen (202) einer Liste von Dienstleistungspositionen basierend auf einem Abtastergebnis, wobei die Liste von Dienstleistungspositionen Zieldienstleistungstypen umfasst, die in allen Dienstleistungspositionen enthalten sind, wobei unterschiedliche Dienstleistungstypen unterschiedlichen Sammelkomponenten entsprechen;
Bestimmen (207) von Zielsammelkomponenten, die jedem der Zieldienstleistungstypen entsprechen, wobei die Zielsammelkomponenten eine Zahl von Müllsammellogiken einschließen und jede Müllsammellogik unterschiedlich ist, so dass die Müllsammellogiken der Zielkomponenten für die Dienstleistungspositionen auf der Liste der Dienstleistungspositionen nicht dupliziert werden; und
Sammeln (209) von Müll für die entsprechenden Zieldienstleistungstypen durch Verwenden jeder der Zielsammelkomponenten.

2. Verfahren nach Anspruch 1, wobei das Verfahren vor dem Erhalten von Dienstleistungstypen, die in allen Dienstleistungspositionen enthalten sind, Folgendes umfasst;
Festlegen entsprechender Sammelkomponenten für unterschiedliche Dienstleistungstypen, wobei ein Dienstleistungstyp mindestens einer Sammelkomponente entspricht, und wobei das Festlegen entsprechender Sammelkomponenten für unterschiedliche Dienstleistungstypen Folgendes umfasst:
Festlegen einer Sammelkomponente, die allen Dienstleistungstypen entspricht, die dieselbe Müllsammellogik aufweisen, wobei alle die Dienstleistungstypen, die dieselbe Müllsammellogik aufweisen, die entsprechende Sammelkomponente gemeinsam nutzen und wiederverwenden; und
jeweils Festlegen entsprechender Sammelkomponenten für jeden der anderen Dienstleistungstypen.

3. Verfahren nach Anspruch 1 oder 2, wobei das Bestimmen von Zielsammelkomponenten, die den Zieldienstleistungstypen entsprechen, Folgendes umfasst:
Beurteilen (203), ob in der Liste von Dienstleistungspositionen ein neuer Zieldienstleistungstyp existiert; und
dann, wenn ein Beurteilungsergebnis positiv ist, Erhalten (204) einer neuen Zielsammelkomponente, die dem neuen Zieldienstleistungstypen entspricht.

4. Verfahren nach Anspruch 3, das ferner Folgendes umfasst:
dann, wenn das Beurteilungsergebnis ist, dass kein neuer Zieldienstleistungstyp existiert, Erhalten (205) von gelöschten Zieldienstleistungstypen jeder Dienstleistungsposition, die der Liste von Dienstleistungspositionen entspricht;
Beurteilen (206), ob die Zielsammelkomponente, die dem gelöschten Zieldienstleistungstyp entspricht, von anderen Zieldienstleistungstypen in der Liste der Dienstleistungspositionen gemeinsam genutzt und wiederverwendet wird;
dann, wenn das Beurteilungsergebnis negativ ist, Löschen (207) der Zielsammelkomponente, die dem gelöschten Zieldienstleistungstyp entspricht; und
Bestimmen (208) entsprechender Zielsammelkomponenten für andere Zieldienstleistungstypen in der Liste von Dienstleistungspositionen, wobei sich die anderen Zieldienstleistungstypen auf andere Zieldienstleistungstypen als die neuen Zieldienstleistungstypen und die gelöschten Zieldienstleistungstypen in der Liste der Dienstleistungspositionen beziehen.

5. Verfahren nach Anspruch 1 oder Anspruch 2, wobei das Sammeln von Müll für die Zieldienstleistungstypen durch Verwenden der Zielsammelkomponenten Folgendes umfasst:
Behandeln der Zieldienstleistungstypen, die in jeder Dienstleistungsposition enthalten sind, als einen Arbeitsschritt und Zuweisen jedes Arbeitsschritts zu allen entsprechenden Zielsammelkomponenten;
Laden aller Zielsammelkomponenten;
Zuweisen von Ausführungsstrang-Datenbasen, die von jeder der Zielsammelkomponenten benötigt werden;
Beginnen der Zielsammelkomponenten, die zugewiesenen Ausführungsstrang-Datenbasen zu verwenden, um die Müllsammellogik auszuführen, um Müllsammlung für entsprechende Zieldienstleistungstypen durchzuführen; und
wobei das Verfahren ferner in dem Prozess des Verwendens der Zielsammelkomponenten, um Müll für die entsprechenden Zieldienstleistungstypen zu sammeln, das Überwachen (210) eines Müllsammlungsfortschritts und das Verwenden des überwachten Müllsammlungsfortschritts als einen Prüfpunkt umfasst.

6. Verfahren nach Anspruch 5, wobei das Verfahren in dem Prozess des Verwendens der Zielsammelkomponenten, um Müll für die entsprechenden Zieldienstleistungstypen zu sammeln, nach dem Überwachen eines Müllsammelfortschritts und dem Verwenden des überwachten Müllsammelfortschritts als einen Prüfpunkt Folgendes umfasst:
dann, wenn ein Haltepunkt in dem Müllsammlungsprozess auftritt, Durchführen (211) von Haltepunkt-Wiederherstellung durch Verwenden des Prüfpunkts, der der Haltepunktzeit am nächsten ist.

7. Müllsammelvorrichtung für ein Computersystem, wobei die Vorrichtung Folgendes umfasst:
ein Erhaltungsmodul (11), das konfiguriert ist, alle Dienstleistungspositionen des Systems abzutasten, wobei die Dienstleistungspositionen Anwendungen enthalten, und wobei jede Dienstleistungsposition einen oder mehrere Dienstleistungstypen enthält; und eine Liste von Dienstleistungspositionen basierend auf einem Abtastergebnis zu erzeugen, wobei die Liste von Dienstleistungspositionen Zieldienstleistungstypen umfasst, die in allen Dienstleistungspositionen enthalten sind, und unterschiedliche Dienstleistungstypen unterschiedlichen Sammelkomponenten entsprechen;
ein Bestimmungsmodul (12), das konfiguriert ist, Zielsammelkomponenten, die jedem der Zieldienstleistungstypen entsprechen, zu bestimmen, wobei die Zielsammelkomponenten eine Zahl von Müllsammellogiken einschließen, wobei jede Müllsammellogik unterschiedlich ist, so dass die Müllsammellogiken der Zielkomponenten für die Dienstleistungspositionen auf der Liste von Dienstleistungspositionen nicht dupliziert werden; und
ein Sammelmodul (13), das konfiguriert ist, für die entsprechenden Zieldienstleistungstypen durch Verwenden jeder der Zielsammelkomponenten Müll zu sammeln.

8. Vorrichtung nach Anspruch 7, wobei die Vorrichtung ferner Folgendes umfasst:
ein Festlegungsmodul (10), das konfiguriert ist, entsprechende Sammelkomponenten für unterschiedliche Dienstleistungstypen festzulegen, bevor das Erhaltungsmodul die Dienstleistungstypen erhält, die in allen Dienstleistungspositionen enthalten sind, wobei ein Dienstleistungstyp mindestens einer Sammelkomponente entspricht.

9. Vorrichtung nach Anspruch 8, wobei das Festlegungsmodul speziell konfiguriert ist, eine Sammelkomponente, die allen Dienstleistungstypen entspricht, die dieselbe Müllsammellogik aufweisen, festzulegen und jeweils entsprechende Sammelkomponenten für jede der anderen Dienstleistungstypen festzulegen, wobei
alle Dienstleistungstypen, die dieselbe Müllsammellogik aufweisen, die entsprechende Sammelkomponente gemeinsam benutzen und diese wiederverwenden.

10. Vorrichtung nach Anspruch 7, wobei das Bestimmungsmodul Folgendes umfasst:
eine Beurteilungseinheit (121), die konfiguriert ist, zu beurteilen, ob in der Liste der Dienstleistungspositionen ein neuer Zieldienstleistungstyp existiert; und
eine Erhaltungseinheit (122), die konfiguriert ist, Folgendes zu tun: dann, wenn die Beurteilungseinheit beurteilt, dass ein neuer Zieldienstleistungstyp existiert, erhalten einer neuen Zielsammelkomponente, die dem neuen Zieldienstleistungstyp entspricht.

11. Vorrichtung nach Anspruch 10, wobei die Erhaltungseinheit ferner konfiguriert ist, das Folgende zu tun: dann, wenn die Beurteilungseinheit beurteilt, dass kein neuer Zieldienstleistungstyp existiert, erhalten von gelöschten Zieldienstleistungstypen jeder Dienstleistungsposition, die der Liste der Dienstleistungspositionen entspricht;
wobei die Beurteilungseinheit ferner konfiguriert ist, zu beurteilen, ob die Zielsammelkomponente, die dem gelöschten Zieldienstleistungstyp entspricht, von anderen Zieldienstleistungstypen in der Liste der Dienstleistungspositionen gemeinsam benutzt oder wiederverwendet wird;
wobei das Bestimmungsmodul ferner Folgendes umfasst:
eine Löscheinheit (123), die konfiguriert ist, das Folgende zu tun: dann, wenn die Beurteilungseinheit beurteilt, dass die Zielsammelkomponente, die dem gelöschten Zieldienstleistungstyp entspricht, nicht gemeinsam genutzt und wiederverwendet wird, löschen der Zielsammelkomponente, die dem gelöschten Dienstleistungstypen entspricht; und
eine Bestimmungseinheit (124), die konfiguriert ist, entsprechende Zielsammelkomponenten für andere Dienstleistungstypen in der Liste der Dienstleistungspositionen zu bestimmen, wobei sich die anderen Zieldienstleistungstypen auf andere Zieldienstleistungstypen als die neuen Zieldienstleistungstypen und die gelöschten Zieldienstleistungstypen in der Liste der Dienstleistungspositionen beziehen.

12. Vorrichtung nach einem der Ansprüche 7 bis 9, wobei das Sammelmodul Folgendes umfasst:
eine Zuweisungseinheit (131), die konfiguriert ist, die Zieldienstleistungstypen, die in jeder Dienstleistungsposition enthalten sind, als einen Arbeitsschritt zu behandeln und jeden Arbeitsschritt allen entsprechenden Zielsammelkomponenten zuzuweisen;
eine Ladeeinheit (132), die konfiguriert ist, alle Zielsammelkomponenten zu laden;
eine Datenbasiszuweisungseinheit (133), die konfiguriert ist, Ausführungsstrang-Datenbasen, die von jeder der Zielsammelkomponenten benötigt werden, zuzuweisen; und
eine Ausführungseinheit (134), die konfiguriert ist, zu starten, dass die Zielsammelkomponenten die zugewiesenen Ausführungsstrang-Datenbasen verwenden, um die Müllsammellogik auszuführen, um Müllsammlung für entsprechende Zieldienstleistungstypen durchzuführen.

13. Vorrichtung nach Anspruch 12, die ferner Folgendes umfasst:
ein Überwachungsmodul (14), das konfiguriert ist, in dem Prozess des Verwendens der Zielsammelkomponenten, um Müll für die entsprechenden Zieldienstleistungstypen zu sammeln, einen Müllsammelfortschritt zu überwachen und den überwachten Müllsammelfortschritt als einen Prüfpunkt zu verwenden; und ein Prüfpunktwiederherstellungsmodul (15), das konfiguriert ist, dann, wenn ein Haltepunkt in dem Müllsammlungsprozess auftritt, durch Verwenden des Prüfpunkts, der der Haltepunktzeit am nächsten ist, Haltepunkt-Wiederherstellung durchzuführen.

## Revendications

1. Procédé de récupération d'espace mémoire mis en œuvre par ordinateur pour un système informatique, le procédé comprenant :
l'analyse (201) de tous les éléments de service du système, les éléments de service incluant des applications, chaque élément de service incluant un ou plusieurs types de services ;
la génération (202) d'une liste d'éléments de service basée sur un résultat d'analyse, dans lequel la liste d'éléments de service comprend des types de services cibles compris dans tous les éléments de service, dans lequel différents types de services correspondent à différents composants de récupération ;
la détermination (207) de composants de récupération cibles correspondant à chacun des types de services cibles, les composants de récupération cibles encapsulant un nombre de logiques de récupération d'espace mémoire, chaque logique de récupération d'espace mémoire étant différente de telle sorte que des logiques de récupération d'espace mémoire des composants cibles ne sont pas dupliquées pour les éléments de service sur la liste d'éléments de service ; et
la récupération (209) d'espace mémoire pour les types de services cibles correspondants à l'aide de chacun des composants de récupération cibles.

2. Procédé selon la revendication 1, avant l'obtention de types de services compris dans tous les éléments de service, le procédé comprenant :
l'établissement de composants de récupération correspondants pour différents types de services, dans lequel un type de service correspond à au moins un composant de récupération, et dans lequel l'établissement de composants de récupération correspondants pour différents types de services comprend :
l'établissement d'un composant de récupération qui correspond à tous les types de services ayant la même logique de récupération d'espace mémoire, dans lequel tous les types de services ayant la même logique de récupération d'espace mémoire partagent et réutilisent le composant de récupération correspondant ; et
respectivement l'établissement de composants de récupération correspondants pour chacun des autres types de services.

3. Procédé selon la revendication 1 ou la revendication 2, dans lequel la détermination de composants de récupération cibles correspondant aux types de services cibles comprend :
le fait de juger (203) si un nouveau type de service cible existe dans la liste d'éléments de service ; et
l'obtention (204), si un résultat de jugement est positif, d'un nouveau composant de récupération cible correspondant au nouveau type de service cible.

4. Procédé selon la revendication 3, comprenant en outre :
si le résultat de jugement est qu'aucun nouveau type de service cible n'existe, l'obtention (205) de types de services cibles supprimés de chaque élément de service selon la liste d'éléments de service ;
le fait de juger (206) si le composant de récupération cible correspondant au type de service cible supprimé est partagé et réutilisé par d'autres types de services cibles dans la liste d'éléments de service ;
si le résultat de jugement est négatif, la suppression (207) du composant de récupération cible correspondant au type de service cible supprimé ; et
la détermination (208) de composants de récupération cibles correspondants pour d'autres types de services cibles dans la liste d'éléments de service, dans lequel les autres types de services cibles se rapportent à des types de services cibles autres que les nouveaux types de services cibles et les types de services cibles supprimés dans la liste d'éléments de service.

5. Procédé selon la revendication 1 ou la revendication 2, dans lequel la récupération d'espace mémoire pour les types de services cibles à l'aide des composants de récupération cibles comprend :
le traitement des types de services cibles compris dans chaque élément de service comme une tâche et l'allocation de chaque tâche à tous les composants de récupération cibles correspondants ;
le chargement de tous les composants de récupération cibles ;
l'allocation d'ensembles de fils d'exécution requis par chacun des composants de récupération cibles ;
le démarrage des composants de récupération cibles pour utiliser les ensembles de fils d'exécution alloués pour exécuter la logique de récupération d'espace mémoire pour réaliser la récupération d'espace mémoire pour des types de services cibles correspondants ; et
le procédé comprenant en outre la surveillance (210), dans le processus d'utilisation des composants de récupération cibles pour récupérer de l'espace mémoire pour les types de services cibles correspondants, d'un avancement de la récupération d'espace mémoire et l'utilisation de l'avancement de la récupération d'espace mémoire surveillé comme point de contrôle.

6. Procédé selon la revendication 5, après la surveillance, dans le processus d'utilisation des composants de récupération cibles pour récupérer de l'espace mémoire pour les types de services cibles correspondants, d'un avancement de la récupération d'espace mémoire et l'utilisation de l'avancement de la récupération d'espace mémoire surveillé comme point de contrôle, le procédé comprenant :
la réalisation (211), lorsqu'un point de rupture se produit dans le processus de récupération d'espace mémoire, d'un rétablissement de point de rupture à l'aide du point de contrôle le plus proche de l'heure de point de rupture.

7. Appareil de récupération d'espace mémoire pour un système informatique, l'appareil comprenant :
un module d'obtention (11), configuré pour analyser tous les éléments de service du système, les éléments de service incluant des applications, chaque élément de service incluant un ou plusieurs types de services ; et générer une liste d'éléments de service basée sur un résultat d'analyse, dans lequel la liste d'éléments de service comprend des types de services cibles compris dans tous les éléments de service, et différents types de services correspondent à différents composants de récupération ;
un module de détermination (12), configuré pour déterminer des composants de récupération cibles correspondant à chacun des types de services cibles, les composants de récupération cibles encapsulant un nombre de logiques de récupération d'espace mémoire, chaque logique de récupération d'espace mémoire étant différente de telle sorte que des logiques de récupération d'espace mémoire des composants cibles ne sont pas dupliquées pour les éléments de service sur la liste d'éléments de service ; et
un module de récupération (13), configuré pour récupérer de l'espace mémoire pour les types de services cibles correspondants à l'aide de chacun des composants de récupération cibles.

8. Appareil selon la revendication 7, l'appareil comprenant en outre :
un module d'établissement (10), configuré pour établir des composants de récupération correspondants pour différents types de services avant que le module d'obtention obtienne les types de services compris dans tous les éléments de service, dans lequel un type de service correspond à au moins un composant de récupération.

9. Appareil selon la revendication 8, dans lequel le module d'établissement est spécifiquement configuré pour établir un composant de récupération qui correspond à tous les types de services ayant la même logique de récupération d'espace mémoire, et respectivement établir des composants de récupération correspondants pour chacun des autres types de services, dans lequel tous les types de services ayant la même logique de récupération d'espace mémoire partagent et réutilisent le composant de récupération correspondant.

10. Appareil selon la revendication 7, dans lequel le module de détermination comprend :
une unité de jugement (121), configurée pour juger si un nouveau type de service cible existe dans la liste d'éléments de service ; et
une unité d'obtention (122), configurée pour réaliser ce qui suit : lorsque l'unité de jugement juge qu'un nouveau type de service cible existe, obtenir un nouveau composant de récupération cible correspondant au nouveau type de service cible.

11. Appareil selon la revendication 10, dans lequel l'unité d'obtention est en outre configurée pour réaliser ce qui suit : lorsque l'unité de jugement juge qu'aucun nouveau type de service cible n'existe, obtenir des types de services cibles supprimés de chaque élément de service selon la liste d'éléments de service ;
l'unité de jugement est en outre configurée pour juger si le composant de récupération cible correspondant au type de service cible supprimé est partagé et réutilisé par d'autres types de services cibles dans la liste d'éléments de service ;
le module de détermination comprend en outre :
une unité de suppression (123), configurée pour réaliser ce qui suit : lorsque l'unité de jugement juge que le composant de récupération cible correspondant au type de service supprimé n'est pas partagé et réutilisé, supprimer le composant de récupération cible correspondant au type de service supprimé ; et
une unité de détermination (124), configurée pour déterminer des composants de récupération cibles correspondants pour d'autres types de services cibles dans la liste d'éléments de service, dans lequel les autres types de services cibles se rapportent à des types de services cibles autres que les nouveaux types de services cibles et les types de services cibles supprimés dans la liste d'éléments de service.

12. Appareil selon l'une quelconque des revendications 7 à 9, dans lequel le module de récupération comprend :
une unité d'allocation (131), configurée pour traiter les types de services cibles compris dans chaque élément de service comme une tâche et allouer chaque tâche à tous les composants de récupération cibles correspondants ;
une unité de chargement (132), configurée pour charger tous les composants de récupération cibles ;
une unité d'allocation d'ensembles de fils d'exécution (133), configurée pour allouer des ensembles de fils d'exécution requis par chacun des composants de récupération cibles ; et
une unité d'exécution (134), configurée pour démarrer les composants de récupération cibles pour utiliser les ensembles de fils d'exécution alloués pour exécuter la logique de récupération d'espace mémoire pour réaliser une récupération d'espace mémoire pour des types de services cibles correspondants.

13. Appareil selon la revendication 12, comprenant en outre :
un module de surveillance (14), configuré pour surveiller, dans le processus d'utilisation des composants de récupération cibles pour récupérer de l'espace mémoire pour les types de services cibles correspondants, un avancement de la récupération d'espace mémoire et utiliser l'avancement de la récupération d'espace mémoire surveillé comme point de contrôle ; et un module de rétablissement de point de rupture (15), configuré pour réaliser, lorsqu'un point de rupture se produit dans le processus de récupération d'espace mémoire, un rétablissement de point de rupture à l'aide du point de contrôle le plus proche de l'heure de point de rupture.
